## Europäisches Patentamt

## European Patent Office

## Office européen des brevets

(11) Publication number: **0 138 251**
**B1**

# EUROPEAN PATENT SPECIFICATION

(45) Date of publication of patent specification: **13.01.88**

(51) Int. Cl.⁴: **C 03 C 17/34**

(21) Application number: **84201322.9**

(22) Date of filing: **12.09.84**

(54) Method of providing a transparent layer on a substrate.

(30) Priority: **15.09.83 NL 8303183**

(43) Date of publication of application:
**24.04.85 Bulletin 85/17**

(45) Publication of the grant of the patent:
**13.01.88 Bulletin 88/02**

(84) Designated Contracting States:
**DE FR GB NL**

(56) References cited:
**US-A-4 252 843**

**CHEMICAL ABSTRACTS, vol. 99, 8th August 1983, page 533, no. 46663r, Columbus, Ohio, USA**

**CHEMICAL ABSTRACTS, vol. 88, no. 14, 4th March 1978, page 468, no. 96659n, Columbus, Ohio, USA**

(73) Proprietor: **N.V. Philips' Gloeilampenfabrieken**
**Groenewoudseweg 1**
**NL-5621 BA Eindhoven (NL)**

(72) Inventor: **van der Werf, Pieter**
**c/o INT. OCTROOIBUREAU B.V. Prof. Holstlaan 6**
**NL-5656 AA Einhoven (NL)**
Inventor: **Versteyne, Albertus**
**c/o INT. OCTROOIBUREAU B.V. Prof. Holstlaan 6**
**NL-5656 AA Einhoven (NL)**

(74) Representative: **Auwerda, Cornelis Petrus et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to a method of providing a transparent coating comprising an aluminium oxide layer on a substrate and of providing a stack of layers the lowermost layer of which consists of aluminium oxide.

Such a method of providing metal oxide layers, and also oxides other than that of aluminium, according to which first a layer of relevant metal is provided and said metal is then chemically converted into the relevant metal oxide, is known from German Patent Specification 757 763. A similar method is known from United States Patent Specification 4,190,321 in which the conversion of the metal into the metal oxide is produced electrochemically.

This type of layer or stack of layers, preferably in a thickness of a quarter of the wavelength of the visible light, for example 550 nm, is often used to reduce reflection. Aluminium oxide is frequently used for this purpose. The above-described method in which the conversion of metal into oxide is produced electrolytically, however, shows the disadvantage for aluminium that then the metal cannot be converted completely into the oxide. On the inside of the layer a zone of the metal is not converted into the oxide and this results in absorption of scattering taking place at the non-converted metal.

This disadvantage of aluminium was also indicated already in United States Patent Specification 4,190,321. According to that Patent Specification it can be obviated by keeping the layer, after the electrolytic oxidation, in contact with a dilute solution of sodium chlorite at 80°C for 10 minutes.

The invention provides a simple solution to this problem.

The method of providing a transparent coating comprising an aluminium oxide layer on a substrate in which method an aluminium layer is provided on the substrate and optionally one or more layers of another metal(s) is (are) provided on top of the aluminium layer and the aluminium and other metal layer(s) if present is (are) then converted electrolytically into aluminium oxide and into oxide(s) of the other metal(s) if present, is characterized according to the invention in that before providing the aluminium layer, a transparent electrically conductive layer of the oxide(s) of one or more of the metals tin, indium and cadmium is provided on the substrate, optionally doped to obtain a conductivity which is sufficient to make it possible to convert electrolytically the aluminium and the other metal layer(s) if present entirely into oxide(s).

The transparent conductive layer can be formed at the substrate surface by conversion of a hydrolysable compound of the metal or metals in question by water vapour at the heated substrate surface or by pyrolysis of such a metal compound or compounds. Glass, metal or a synthetic resin may be selected as a substrate. The layer may also be provided by sputtering or vapour deposition. The layer must be sufficiently electrically conductive so as to make it possible to convert the superposed metal layer of metal layers electrolytically into the oxide and the oxides, respectively. This can be established experimentally.

The aluminium can be provided on said substrate by sputtering, vapour deposition or by electrodeposition from a non-aqueous solution, for example, according to US Patent Specification 4,379,030. In the last-mentioned modified embodiment, the advantage exists, at least as regards the aluminium oxide, that the method is performed entirely electrolytically.

The aluminium is then converted anodically entirely into aluminium oxide in electrolyte solutions which are known *per se* for this purpose, for example, those on the basis of sulphuric acid or oxalic acid.

It is also possible to use the method according to the invention for the manufacture of a stack of layers, by alternating the aluminium layer with other layers, for example, Ti or Nb. After the completion of the stack, the assembly is oxidised electrolytically in one operation.

A specific embodiment will now be described in greater detail.

A layer having a thickness of 140 nm of a mixture of indium oxide and tin oxide in the mol ratio 90:10 is provided on a glass substrate by means of vapour deposition. A layer of aluminium having a thickness of 85 nm is provided thereon by sputtering.

The substrate is then connected anodically in an aqueous anodizing solution of the composition 50g of oxalic acid per litre of bath solution at room temperature and is then subjected to the electrolysis process for 30 minutes with a current density of 50 mA/dm$^2$.

After rinsing and drying, the substrate comprising the layers, and aluminium oxide layer having a thickness of approximately $\frac{1}{4}\lambda$ for 550 nm is obtained.

In this experiment the Al$_2$O$_3$ layer on the $\frac{1}{4}\lambda$ layer of indium oxide-tin oxide acts as a two layer anti-reflective coating, the reflection of which at 530 nm decreases from 4.1 to 0.8% as a result of the oxidation treatment.

## Claims

1. A method of providing a transparent coating comprising an aluminium oxide layer on a substrate in which method an aluminium layer is provided on the substrate and optionally one or more layers of another metal(s) is (are) provided on top of the aluminium layer and the aluminium and other metal layer(s) if present is (are) then converted electrolytically into aluminium oxide and into oxide(s) of the other metal(s) if present, characterized in that before providing the aluminium layer, a transparent electrically conductive layer of the oxide(s) of one or more of the metals tin, indium and cadmium is provided on the substrate, optionally doped to obtain a conductivity which is sufficient to make it possible to convert electrolytically the aluminium and the other metal layer(s) if present entirely into oxides(s).

2. A method as claimed in Claim 1, characterized in that the optional other metal layer(s) consist(s) of niobium and/or titanium.

## Patentansprüche

1. Verfahren zum Herstellen eines transparenten Überzugs mit einer Aluminiumoxidschicht auf einem Substrat, wobei auf dem Substrat eine Aluminiumschicht angebracht wird und ggf. eine oder mehrere Schichten aus einem anderen Metall bzw. anderen Metallen oben auf der Aluminiumschicht angebracht wird bzw. werden und wobei die Aluminium- und die andere(n) ggf. vorhandene(n) Metallschicht(en) danach elektrolytisch in Aluminiumoxid und in das (die) Oxid(e) des bzw. der anderen ggf. vorhandenen Metalles bzw. Metalle umgewandelt werden, dadurch gekennzeichnet, dass vor dem Anbringen der Aluminiumschicht eine transparente elektrisch leitende Schicht des Oxids bzw. der Oxide einer oder mehrerer der Metalle Zinn, Indium und Cadmium auf dem Substrat angebracht wird, ggf. dotiert zum Erhalten einer Leitfähigkeit, die ausreicht um es möglich zu machen dass das Aluminium und die andere(n) ggf. vorghandene(n) Metallschicht(en) völlig in Oxid)e) umgewandelt werden.

2. Verfahren nach Anspruch 1, dadurch gekennzeichnet, dass die ggf. vorhandene(n) andere(n) Metallschicht(en) aus Niob und/oder Titan besteht bzw. bestehen.

## Revendications

1.. Procédé pour la réalisation d'un revêtement transparent constitué par une couche en oxyde d'aluminium sur un substrat, selon lequel une couche en aluminium est appliquée sur le substrat et, éventuellement, une ou plusieurs couches d'un autre métal ou d'autres métaux est (sont) appliquée(s) sur la couche d'aluminium et l'aluminium et, au besoin l(es) autre(s) couche(s) métallique(s) est (sont) transformée(s), par voie électrolytique, en oxyde d'aluminium et, au besoin, en l'oxyde ou les oxydes de l'autre métal ou des autres métaux, est caractérisé en ce qu'avant l'application de la couche d'aluminium, une couche électroconductrice transparente des oxyde(s) d'un ou de plusieurs des métaux étain, indium et cadmium est appliquée sur le substrat, éventuellement dopée afin d'obtenir une conductivité suffisante permettant de transformer entièrement et électrolytiquement l'aluminium et, au besoin, les autres couches métallique(s) en oxyde(s).

2. Procédé selon la revendication 1, caractérisé en ce que l(es) éventuelle(s) autre(s) couche(s) métallique(s) est (sont) constituée(s) par du niobium et/ou du titane.